# EUROPEAN PATENT SPECIFICATION

(11) **EP 2 037 142 B1**
(45) Date of publication and mention of the grant of the patent: **06.08.2014**
(21) Application number: 08105210.2
(22) Date of filing: 03.09.2008
(51) Int. Cl.: F16D 13/54, F16D 13/04

(54) **Power transmitting apparatus**
Kraftübertragungsvorrichtung
Appareil de transmission de couple

(30) Priority: 12.09.2007 JP 2007236489
(43) Date of publication of application: 18.03.2009
(73) Proprietor: Kabushiki Kaisha F.C.C., Hamamatsu-shi Shizuoka-ken (JP)
(72) Inventor: Kataoka, Makoto, Hamamatsu-shi Shizuoka (JP); Furuhashi, Shinji, Hamamatsu-shi Shizuoka (JP); Itou, Shunichi, Hamamatsu-shi Shizuoka (JP)
(74) Representative: Cohausz & Florack

(56) References cited:
- JP-A- 59 219 525
- JP-A- 59 231 217
- JP-A- 62 072 927
- US-A1- 2005 150 736

## Description

### BACKGROUND OF THE INVENTION

### Field of the Invention

The present invention relates to a power transmitting apparatus for arbitrarily transmitting or cutting-off a rotational force of the input member to the output member.

### Description of Background Art

In general, the power transmission apparatus for a motorcycle is intended to arbitrarily transmit or cut off a power of an engine to a transmission and a driving wheel and comprises an input member connected to an engine side, an output member connected to the transmission and the driving wheel side, and a clutch member connected to the output member. The power can be transmitted by pressure-contacting a plurality of driving clutch plates and cut-off by releasing the pressure-contacting force between the driving clutch plates and driven clutch plates.

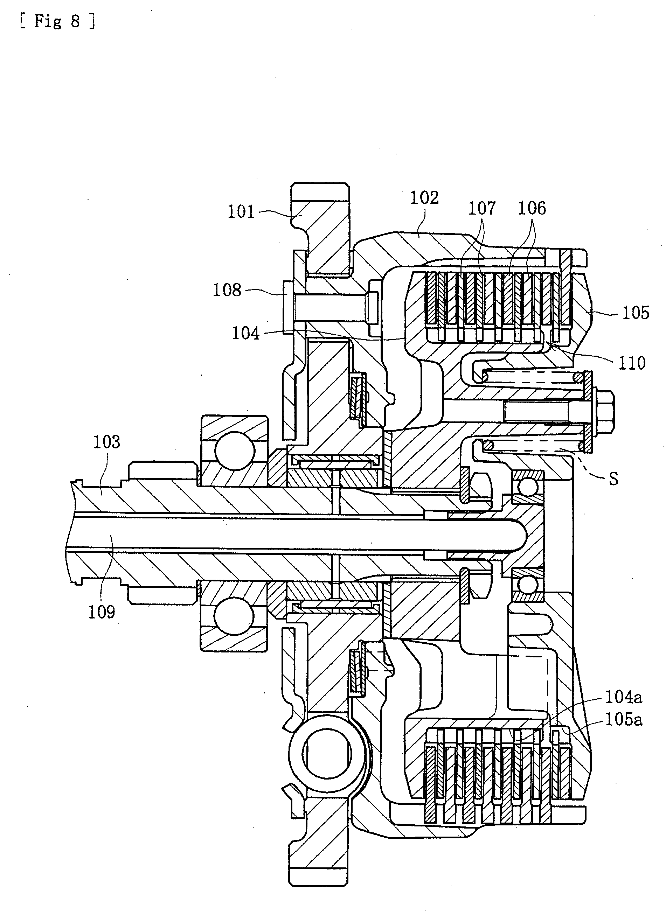

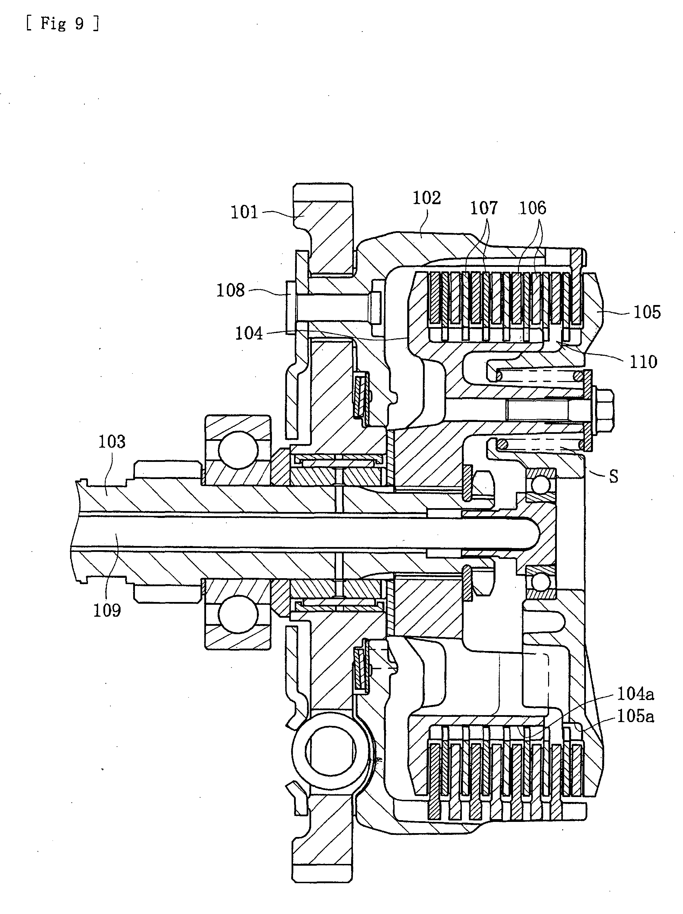

In general, the power transmission apparatus comprises, as shown in Figs. 8 and 9, a clutch housing 102 on which a gear 101 is formed, a clutch member 104 connected to a shaft 103 as an output member, a pressure member 105 mounted on the clutch member 104 at the right side thereof, driving clutch plates 106 connected to the clutch housing 102, and driven clutch plates 107 connected to the clutch member 104.

It is well known that the power transmission is carried out by pressure-contacting the driving clutch plates 106 and the driven clutch plates 107 each other by moving the pressure member 105 to the left direction as shown in Fig. 8 and the power transmission is cut off by releasing the pressure-contacting force between the driving clutch plates 106 and driven clutch plates 107 as shown in Fig. 9. This is well known prior art and there is no special document information as to such a technology. Friction clutches are, for example, known from JP 59 231217 A and JP 59 219525 A.

### Disclosure of the Invention

### Problems to be solved by the Invention

However in the power transmitting apparatus of the prior art, it is a problem that a fitting engagement portion between the clutch member 104 and the pressure member 105 would be disengaged when the pressure member 105 is axially moved toward the right direction in Fig. 9 to release the driving clutch plates 106 and the driven clutch plates 107 in order to cut off the power transmission therebetween. If the pressure member 105 would be disengaged from the clutch member 104, the power transmission and power cutting-off functions of the power transmitting apparatus could not be performed thereafter.

Especially in the power transmitting apparatus having a back-torque limiting cams formed as tapered surfaces so as to absorb a back-torque when the back-torque is caused by moving (lifting) the pressure member 105 toward a direction for releasing the pressure-contact between the driving clutch plates 106 and the driven clutch plates 107, the axial movement of the pressure member 105 would be sometimes larger than a predetermined amount during the movement (lifting) caused by the back-torque limiting cam and thus the pressure member 105 would be disengaged from the clutch member 104.

### SUMMARY OF THE INVENTION

It is, therefore, an object of the present invention to provide a power transmitting apparatus which can prevent the disengagement of the pressure member from the clutch member during an axial movement of the pressure member for cutting-off the power transmission of the apparatus.

### Means for solving the problems

For achieving the object of the present invention above, there is provided, according to claim 1, a power transmitting apparatus comprising a clutch housing rotatable together with an input member and supporting a plurality of driving clutch plates; a clutch member supporting a plurality of driven clutch plates alternately arranged between the driving clutch plates via spline fitting and connected to an output member ; a pressure member mounted on the clutch member axially movably therealong for carrying out the pressure-contact or release between the driving clutch plates and the driven clutch plates; and back-torque limiting cams for releasing the connection between the driving clutch plates and the driven clutch plates when the rotation speed of the output member has exceeded that of the input member; in which a rotational force inputted to the input member can be transmitted to the output member by carrying out the pressure-contact or release between the driving clutch plates and the driven clutch plates, wherein the power transmitting apparatus further comprises a limiting means for limiting a movement of the pressure member toward a direction away from the clutch member, when the clutch member is rotated relative to the pressure member.

For achieving the object of the present invention, there is also provided, according to claim 1, that said limiting means comprises a stopper which abuts against the pressure member when the pressure member is axially moved a predetermined distance.

It is preferable as defined in claim 2 that said stopper comprises a bearing plate for bearing one ends of clutch springs normally urging the pressure member to the clutch member, and that the bearing plate abuts against the pressure member when the pressure member is axially moved a predetermined distance relative to the clutch member and limits a further axial movement of the pressure member.

### Effects of the Invention

According to the present invention of claim 1, since the movement of the pressure member toward a direction away from the clutch member is limited by the limiting means, it is possible to prevent the disengagement of the pressure member from the clutch member during an axial movement of the pressure member for cutting-off the power transmission of the apparatus.

According to the present invention of claim 1, since the limiting means comprises a stopper which abuts against the pressure member when the pressure member is axially moved a predetermined distance, it is possible to more firmly prevent the disengagement of the pressure member from the clutch member during an axial movement of the pressure member for cutting-off the power transmission of the apparatus.

According to the present invention of claim 2, since that stopper comprises a bearing plate for bearing one ends of clutch springs normally urging the pressure member to the clutch member, and that the bearing plate abuts against the pressure member when the pressure member is axially moved a predetermined distance relative to the clutch member and limits a further axial movement of the pressure member, it is possible to provide the stopper with double functions of the bearing plate for the clutch springs and the limiting means for limiting the axial movement of the pressure member.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal section view of a power transmitting apparatus of a first embodiment of the present invention before lifting of the pressure member;
Fig. 2 is a longitudinal section view of a power transmitting apparatus of a first embodiment of the present invention after lifting of the pressure member;
Fig. 3 is a longitudinal section view of a modification of the power transmitting apparatus of a first embodiment of the present invention before lifting of the pressure member;
Fig. 4 is a longitudinal section view of a modification of the power transmitting apparatus of a first embodiment of the present invention after lifting of the pressure member;
Fig. 5 is a longitudinal section view of a power transmitting apparatus not according to the invention before lifting of the pressure member;
Fig. 6 is a sectional view taken along a line VI-VI in Fig. 5 showing a condition before lifting of the pressure member;
Fig. 7 is a sectional view similar to Fig. 6 showing a condition after lifting of the pressure member;
Fig. 8 is a longitudinal section view of a power transmitting apparatus of a prior art before lifting of the pressure member; and
Fig. 9 is a longitudinal section view similar to Fig. 8 after lifting of the pressure member.

### DESCRIPTION OF THE PREFERRED EMBODIMENTS

### Best mode for carrying out the Invention

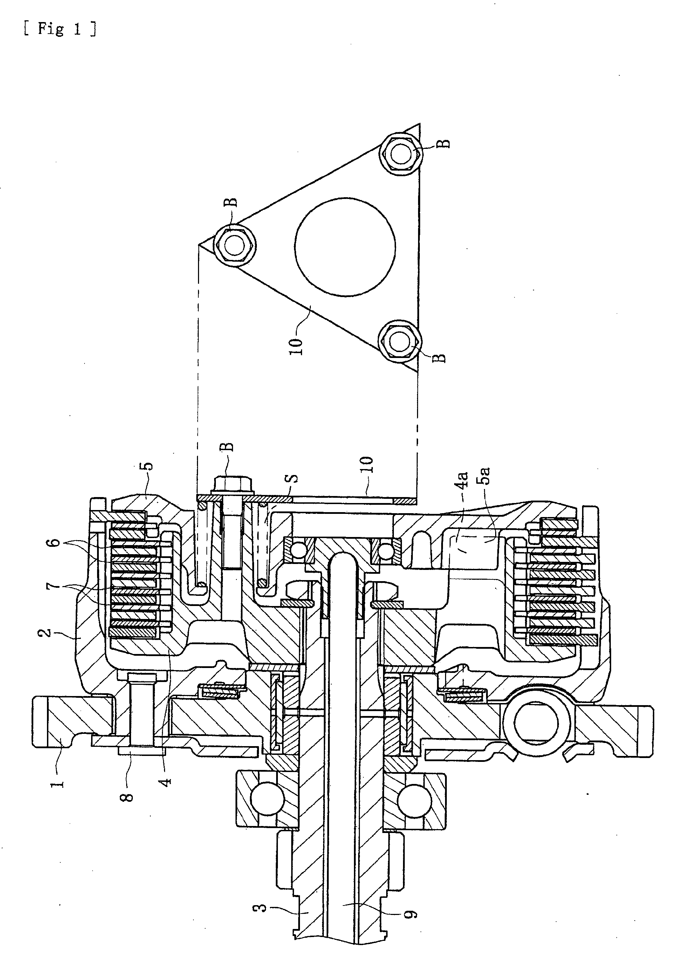

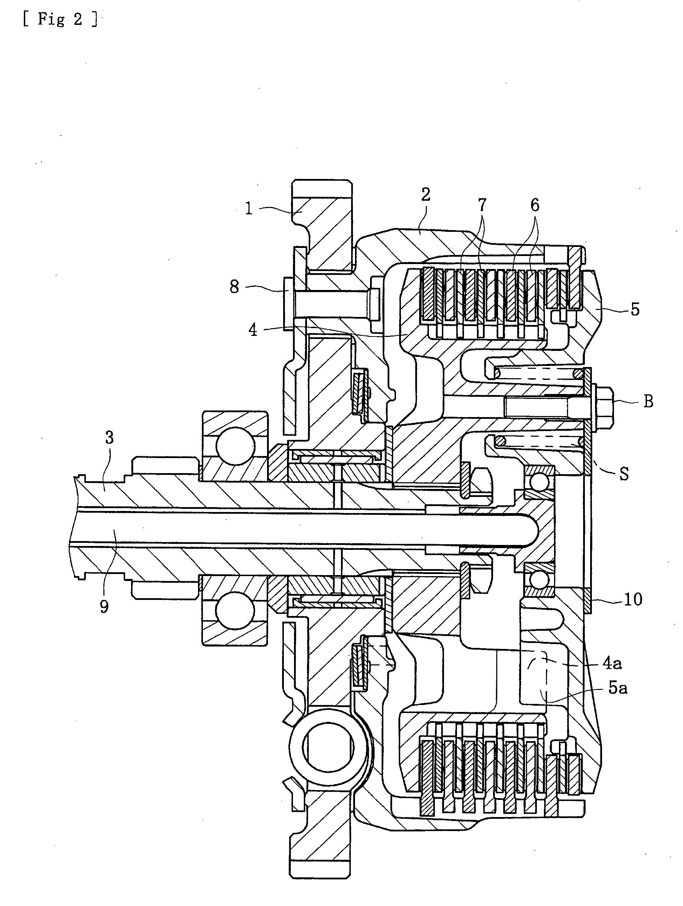

Preferred embodiments of the present invention will be hereinafter described with reference to accompanied drawings. A power transmitting apparatus of a first embodiment of the present invention is mounted on a vehicle such as a motorcycle to arbitrarily transmit or cut off the driving force of an engine to a transmission or a driving wheel. As shown in Figs. 1 and 2, the power transmitting apparatus of the present invention comprises a clutch housing 2 on which a gear 1 as an input member is mounted, a clutch member 4 connected to a shaft 3 as an output member, a pressure plate 5 mounted on the clutch member 4 at its right end (in view of Fig. 1) thereof, driving clutch plates 6 connected to the clutch housing 2, and driven clutch plates 7 connected to the clutch member 4.

The gear 1 is rotated around the shaft 3 by a driving force (rotational force) transmitted from the engine and connected to the clutch housing 2 via rivets 8 etc. The clutch housing 2 is a cylindrical casing member opened at the right end thereof and provided with a plurality of driving clutch plates 6 on the inner circumferential wall thereof. Each of the driving clutch plates 6 is formed as a substantially annular plate member and adapted to be rotated together with the clutch housing 2 and to be axially slid thereon.

The clutch member 4 is formed as a cylindrical casing member opened at the right end thereof and adapted to be received within the clutch housing 2. The shaft 3 passes through the center of the clutch member 4 and is connected thereto via a spline connection and thus is rotated by the clutch member 4. Axially extending spline is formed on the outer circumferential surface of the clutch member 4 and the driven clutch plates 7 are fitted on the spline.

More in detail, the spline is formed by alternately arranged projections and grooves around the outer circumferential surface of the clutch member 4. A central bore of each driven clutch plate 7 formed with projections and grooves corresponding to those of the clutch member 4 is fitted on the clutch member so that the driven clutch plate 7 can axially slide on the clutch member 4 but cannot rotate relative to the clutch member 4.

These driven clutch plates 7 (including driven clutch plates 7 spline fitted on the pressure member 5) are arranged alternately with the driving clutch plates 6 so that mutually adjacent clutch plates 6 and 7 can be pressure-contacted or released. That is, both clutch plates 6 and 7 are allowed to be axially slid respectively on the clutch housing 2 and the clutch member 4 and thus pressure-contacted each other when pushed by the pressure plate 5 toward a left direction as shown in Fig. 1 so that the rotational force can be transmitted from the clutch housing 2 to the clutch member 4 and the shaft 3. On the contrary, when releasing the pressure of the pressure plate 5, they are also released each other and the clutch member 4 cannot follow the rotation of the clutch housing 2 and is stopped so that no power cannot be transmitted to the shaft 3 as shown in Fig. 2.

In this case, it should be noted that"release"of the clutch plates 6 and 7 means a condition in which the pressure-contact is lost and thus the clutch member 4 does not follow the rotation of the clutch housing 2 (i.e. a condition in which the driving clutch plates 6 slide on the driven clutch plates 7) and thus it is out of the question whether there is any clearance between the clutch plates 6 and 7.

The pressure plate 5 is arranged at a position closing the opening (the right end) of the clutch member 4 and is normally urged toward a left direction by the clutch spring S. The circumferential edge portion of the pressure plate 5 abuts the clutch plate 6 positioned at most right position and the clutch plates 6 and 7 are normally pressure-contacted each other by the clutch spring S. Accordingly, the clutch housing 2 and the clutch member 4 are kept in a normally connected condition so that the gear 1 can rotate the shaft 3 when the rotational force is inputted to the gear 1. A reference character "B" in the drawings denotes a bolt screwed into a boss portion projected from the clutch member 4.

An axially extending push rod 9 is arranged within the shaft 3. The pressure-contact force between the driving and driven clutch plates 6 and 7 can be released when a driver of vehicle operates a push rod 9 to move it toward a right direction (in view of Fig. 1) so as to move the pressure plate 5 toward a right direction against the urging force of the clutch spring S. When the pressure-contacting force between the driving and driven clutch plates 6 and 7 is released, the rotational force inputted to the gear 1 and the clutch housing 2 is cut-off and thus cannot be transmitted to the shaft 3. That is, the pressure-contact or the release between the plates 6 and 7 can be performed by the axial movement of the push rod 9 and accordingly the pressure plate 5.

The clutch member 4 and the pressure member 5 are respectively formed with a cam surfaces 4a, 5a which are oppositely arranged and pressure-contacted and separated each other for forming a pressure-contact assisting cam and a back-torque limiting cam. Under a condition in which the rotation force inputted to the gear 1 and the clutch housing 2 can be transmitted to the shaft 3 via the clutch member 4, the rotation force is applied to the pressure member 5 and thus a force increasing the pressure-contacting force between the driving clutch plates 6 and the driven clutch plates 7 by the action of the pressure-contact assisting cam.

On the contrary, when the rotational speed of the shaft 3 exceeds that of the clutch housing 2 and the back-torque is generated in the power transmitting apparatus, the pressure member 5 is moved by the back-torque limiting cam to release (separate) the driving clutch plates 6 and the driven clutch plates 7. Thus some troubles which would otherwise be caused on the power transmitting apparatus and the power source (e.g. engine) can be avoided.

According to the present invention, the power transmitting apparatus comprises a stopper 10 as a limiting means for limiting a movement of the pressure member 5 in a direction away from the clutch member 4. The stopper 10 is formed by a bearing plate bearing one ends of the clutch springs"S"commonly urging the pressure member 5 to the clutch member 4 and abutting against the pressure member 5 to limit a further axial movement of the pressure member 5 when the pressure member 5 is axially moved a predetermined distance toward the right direction (Fig. 2).

As shown in Fig. 1, the stopper 10 is the bearing plate of substantially triangular configuration secured to the clutch member 4 by three bolts "B" and adapted to limit a further axial movement of the pressure member 5 with the bearing plate being abutted against the pressure member 5 when the pressure member 5 is axially moved a predetermined distance (Fig. 2). Thus the stopper 10 has double functions of the bearing plate (washer) for the clutch springs "S" and the limiting means for limiting the axial movement of the pressure member 5. The configuration of the stopper 10 may be other one than the triangle, e.g. an annular configuration.

According to the present invention, since the movement of the pressure member 5 is limited by the stopper 10 (i.e. limiting means), it is possible to prevent disengagement of the fitting engagement between the pressure member 5 and the clutch member 4 during the axial movement of the pressure member 5. Since the stopper 10 (limiting means) abuts against the pressure member 5 when the pressure member is axially moved a predetermined distance and limits a further axial movement thereof, it is possible to more firmly prevent the disengagement of the pressure member 5 from the clutch member 4 during an axial movement of the pressure member.

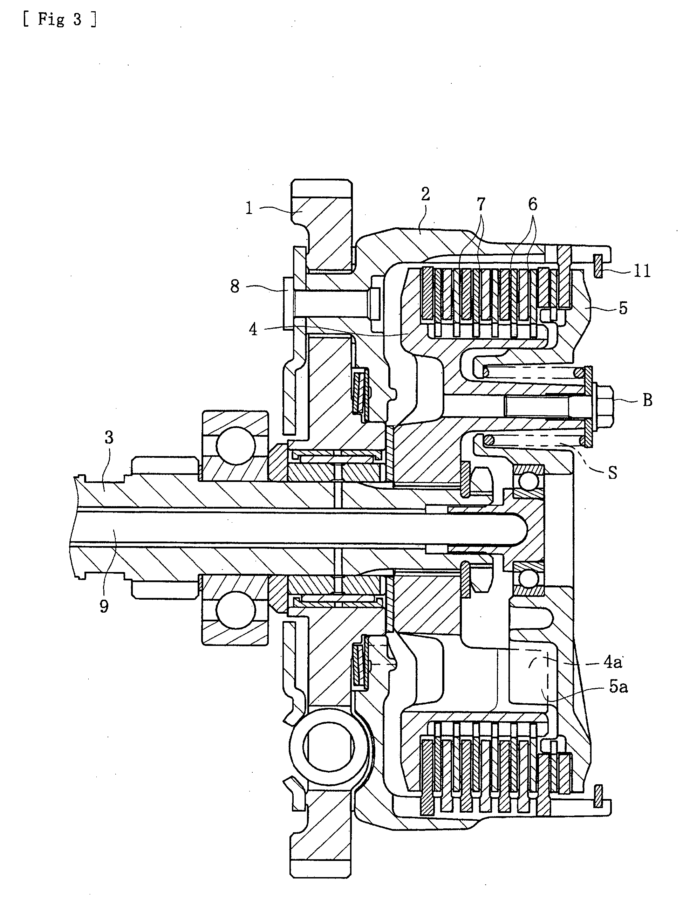

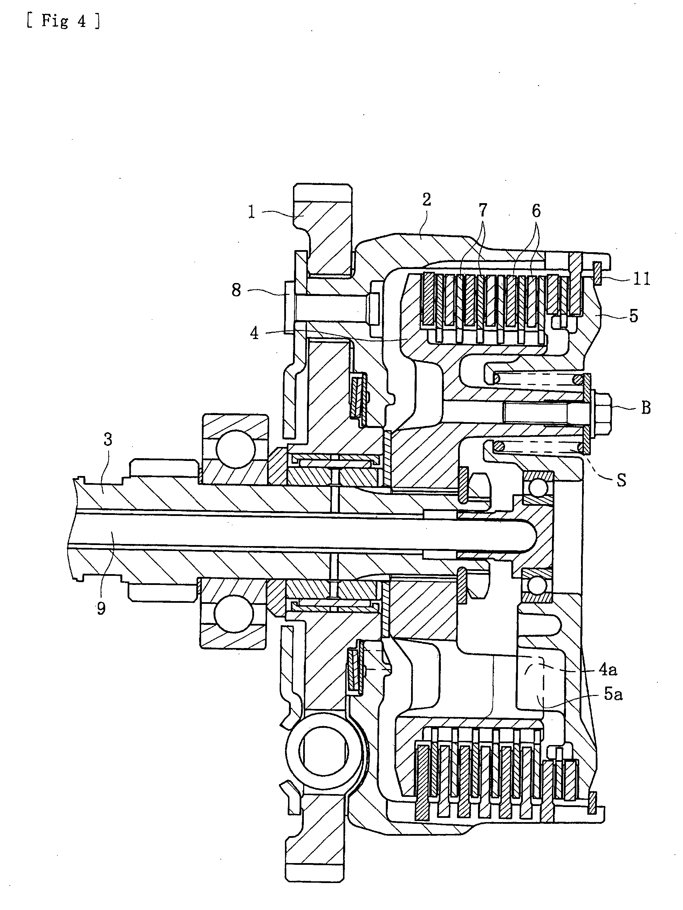

As one example, the stopper 10 may be modified to a stopper 11 (Figs. 3 and 4) projected radially inward from the clutch housing (input member) 2. Similarly to the stopper 10, this stopper 11 can also limit the movement of the pressure member 5, it is possible to prevent the disengagement of the pressure member 5 from the clutch member 4. Since the stopper 11 abuts against the pressure member 5 when the pressure member is axially moved a predetermined distance and limits a further axial movement thereof, it is possible to more firmly prevent the disengagement of the pressure member 5 from the clutch member 4 during an axial movement of the pressure member.

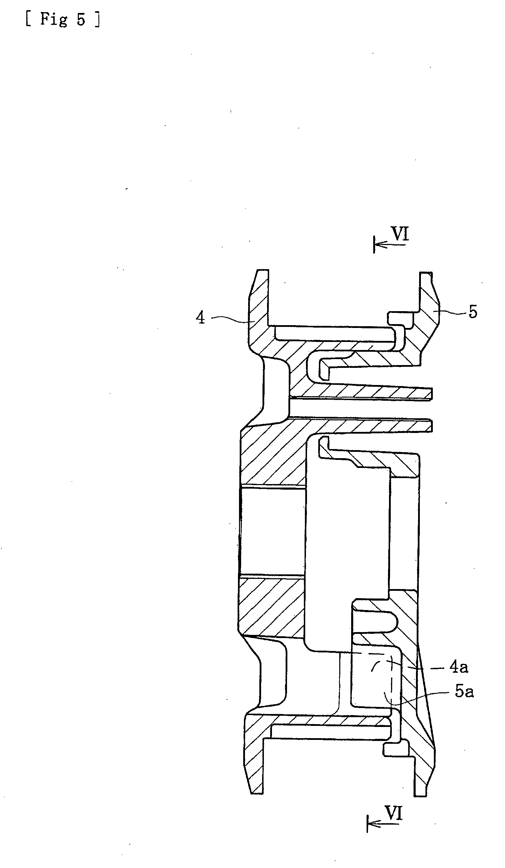

A further apparatus not in accordance with the invention will be described. Similarly to the first embodiment this power transmitting apparatus is mounted on a vehicle such as a motorcycle to arbitrarily transmit or cut off the driving force of an engine to a transmission or a driving wheel. As shown in Figs. 5~7, the power transmitting apparatus comprises an abutting surface 4b formed on the clutch member 4, and an abutting surface 5b formed on the pressure member 5 arranged oppositely to the abutting surface 4b. The clutch housing as the input member, driving clutch plates and the driven clutch plates etc. not shown in these drawings are same as those of the first embodiment.

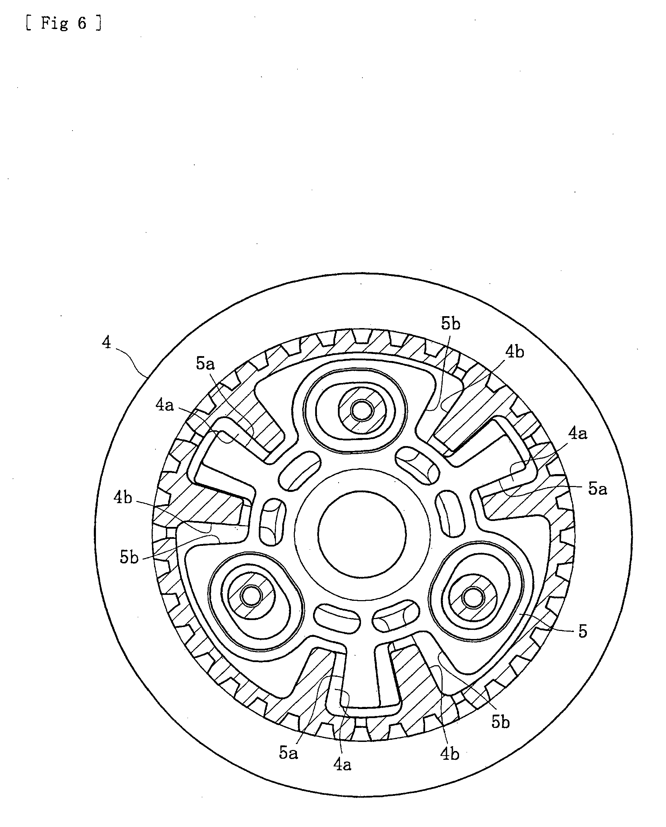

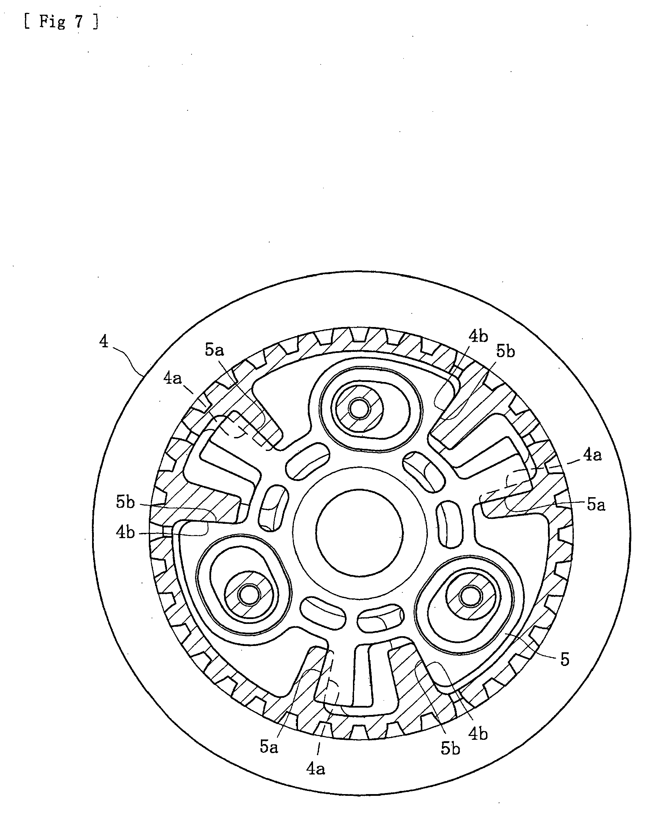

In this embodiment, the limiting means for limiting the movement of the pressure member 5 is formed by the abutting surface 4b of the clutch member 4 and the abutting surface 5b of the pressure member 5. That is, When the pressure member 5 is rotated relative to the clutch member 4, the power transmitting apparatus is shifted from a condition of Fig.6 to a condition of Fig. 7 by the action of the back-torque limiting cam formed by cam surfaces 4a, 5a. Thus the abutting surfaces 4b, 5b are abutted each other and further rotation of the pressure member 5 is limited and accordingly the axial movement (movement of the pressure member 5 toward a direction away from the clutch member 4) of the pressure member 5 is also limited.

According to another apparatus, the axial movement of the pressure member 5 is limited by limiting the rotational movement of the pressure member 5 by the action of the abutting surfaces 4b, 5b of the back-torque limiting cam. Thus the disengagement of the pressure member 5 from its fitting engagement with the clutch member can be firmly prevented.

According to this other apparatus, since the further rotation of the pressure member 5 is limited by abutting the abutting surfaces 4b, 5b each other, any other separate means for increasing the strength of the structural components is not required as compared for example with a structure in which a portion of the pressure member 5 is interfered by boss portions (boss portions into which the bolts "B" are screwed) of the clutch member 4. Similarly to the first embodiment, since the movement of the pressure member 5 is limited, it is possible to prevent the pressure member from being disengaged from its fitting engagement with the clutch member 4 during the axial movement of the pressure member 5 for releasing the power transmitting apparatus.

Although the present invention has been described with reference to the preferred embodiment, the present invention is not limited to the illustrated explanations. For example, although the present invention is illustrated and described the power transmitting apparatus provided with both the back-torque limiting cam and the pressure-contact assisting cam, it is sufficient that the power transmitting apparatus is provided with at least the back-torque limiting cam. The power transmitting apparatus of the present invention can be applied to a power transmitting apparatus of various multiple disc types used for automobiles, three and four wheeled buggies or various generalized machines other than motorcycles.

### Applicability in industry

The power transmitting apparatus of the present invention can be applied to those having different outline configurations or additional functions if they have a limiting means for limiting the movement of the pressure member.

## Claims

1. A power transmitting apparatus comprising:
a clutch housing (2) rotatable together with an input member (1) and supporting a plurality of driving clutch plates (6);
a clutch member (4) supporting a plurality of driven clutch plates (7) alternately arranged between the driving clutch plates (6) via spline fitting and connected to an output member (3);
a pressure member (5) mounted on the clutch member (4) axially movably therealong for carrying out the pressure-contact or release between the driving clutch plates (6) and the driven clutch plates (7); and
back-torque limiting cams (4a, 5a) for releasing the connection between the driving clutch plates (6) and the driven clutch plates (7) when the rotation speed of the output member (3) has exceeded that of the input member (1); in which a rotational force inputted to the input member (1) can be transmitted to the output member (3) by carrying out the pressure-contact or release between the driving clutch plates (6) and the driven clutch plates (7), wherein the power transmitting apparatus further comprises a limiting means for limiting a movement of the pressure member (5) toward a direction away from the clutch member (4), when the clutch member (4) is rotated relative to the pressure member (5), **characterized in that** said limiting means comprises a stopper (10 or 11) which abuts against the pressure member (5) when the pressure member (5) is axially moved a predetermined distance.

2. A power transmitting apparatus of claim 1 wherein said stopper (10) comprises a bearing plate for bearing one ends of clutch springs (S) normally urging the pressure member (5) to the clutch member (4), and wherein the bearing plate abuts against the pressure member (5) when the pressure member (5) is axially moved a predetermined distance relative to the clutch member (4) and limits a further axial movement of the pressure member (5).

## Patentansprüche

1. Leistungsübertragungsvorrichtung, umfassend:
ein Kupplungsgehäuse (2) das zusammen mit einem Eingangselement (1) drehbar ist und mehrere Antriebskupplungsscheiben (6) trägt;
ein Kupplungselement (4), das mehrere angetriebene Kupplungsscheiben (7) trägt, die über eine Kerbverzahnungspassung abwechselnd zwischen den Antriebskupplungsscheiben (6) angeordnet sind und mit einem Ausgangselement (3) verbunden sind;
ein Druckelement (5), das in der Achsenrichtung an dem Kupplungselement (4) beweglich an diesem angebracht ist, um den Druckkontakt oder das Lösen zwischen den Antriebskupplungsscheiben (6) und den angetriebenen Kupplungsscheiben (7) vorzunehmen; und
Rückdrehmomentbegrenzungsnocken (4a, 5a), um die Verbindung zwischen den Antriebskupplungsscheiben (6) und den angetriebenen Kupplungsscheiben (7) zu lösen, wenn die Drehgeschwindigkeit des Ausgangselements (3) jene des Eingangselements (1) überschritten hat; wobei eine Drehkraft, die in das Eingangselement (1) eingebracht wird, durch Vornehmen des Druckkontakts oder des Lösens zwischen den Antriebskupplungsscheiben (6) und den angetriebenen Kupplungsscheiben (7) zu dem Ausgangselement (3) übertragen werden kann, wobei die Leistungsübertragungsvorrichtung ferner ein Begrenzungsmittel umfasst, um eine Bewegung des Druckelements (5) in eine von dem Kupplungselement (4) weg gerichtete Richtung zu begrenzen, wenn das Kupplungselement (4) in Bezug auf das Druckelement (5) gedreht wird, **dadurch gekennzeichnet, dass** das Begrenzungsmittel einen Anschlag (10 oder 11) umfasst, der auf das Druckelement (5) trifft, wenn das Druckelement (5) über eine vorherbestimmte Entfernung in der Achsenrichtung bewegt wird.

2. Leistungsübertragungsvorrichtung nach Anspruch 1, wobei der Anschlag (10) eine Lagerplatte umfasst, um ein Ende von Kupplungsfedern (S) zu lagern, die das Druckelement (5) in der Regel zu dem Kupplungselement (4) drängen, und wobei die Lagerplatte auf das Druckelement (5) trifft, wenn das Druckelement (5) in Bezug auf das Kupplungselement (4) über eine vorherbestimmte Entfernung in der Achsenrichtung bewegt wird, und eine weitere Bewegung des Druckelements (5) in der Achsenrichtung begrenzt.

## Revendications

1. Dispositif de transmission de puissance comprenant :
un logement d'embrayage (2) rotatif conjointement à un élément d'entrée (1) et soutenant une pluralité de plaques d'embrayage meneuses (6) ;
un élément d'embrayage (4) soutenant une pluralité de plaques d'embrayage menées (7) disposées en alternance entre les plaques d'embrayage meneuses (6) via un ajustement par cannelure et raccordé à un élément de sortie (3) ;
un élément de pression (5) monté sur l'élément d'embrayage (4) de manière déplaçable axialement le long de celui-ci pour effectuer le contact ou la libération par pression entre les plaques d'embrayage meneuses (6) et les plaques d'embrayage menées (7) ; et
des cames de limitation de couple arrière (4a, 5a) pour débloquer le raccordement entre les plaques d'embrayage meneuses (6) et les plaques d'embrayage menées (7) quand la vitesse de rotation de l'élément de sortie (3) a dépassé celle de l'élément d'entrée (1) ; dans lequel une force de rotation entrée dans l'élément d'entrée (1) peut être transmises à l'élément de sortie (3) en effectuant le contact ou la libération par pression entre les plaques d'embrayage meneuses (6) et les plaques d'embrayage menées (7), dans lequel le dispositif de transmission de pression comprend en outre un moyen de limitation pour limiter un mouvement de l'élément de pression (5) dans le sens d'une direction s'éloignant de l'élément d'engrenage (4), quand l'élément d'engrenage (4) est tourné par rapport à l'élément de pression (5), **caractérisé en ce que** ledit moyen de limitation de pression comprend une butée (10 ou 11) qui bute contre l'élément de pression (5) quand l'élément de pression (5) est déplacé axialement d'un distance prédéterminée.

2. Dispositif de transmission de puissance selon la revendication 1, dans lequel ladite butée (10) comprend une plaque de palier pour supporter une extrémité des ressorts d'embrayage (S) pressant normalement l'élément de pression (5) vers l'élément d'embrayage (4), et dans lequel la plaque de palier bute contre l'élément de pression (5) quand l'élément de pression (5) est déplacé axialement d'un distance prédéterminée par rapport à l'élément d'embrayage (4) et limite un mouvement axial supplémentaire de l'élément de pression (5).
